# EUROPÄISCHE PATENTANMELDUNG

(11) **EP 1 591 002 A1**
(43) Veröffentlichungstag der Anmeldung: **02.11.2005**
(21) Anmeldenummer: 05008871.5
(22) Anmeldetag: 22.04.2005
(51) Int. Cl.: A01D 43/063, A01D 34/67

(54) **Rasenmäher**

(30) Priorität: 27.04.2004 DE 102004020788
(71) Anmelder: Kress, Werner, D-89077 Ulm (DE)
(72) Erfinder: Kress, Werner, D-89077 Ulm (DE)
(74) Vertreter: Sawodny, Michael-Wolfgang

(57) **Zusammenfassung**

Die Erfindung betrifft einen Rasenmäher
- mit einer Schneideinrichtung, die ein um eine vertikale Achse umlaufendes Messer umfasst;
- mit einem Ringkanal, der konzentrisch zur Drehachse des Messers verläuft und oberhalb des Messers angeordnet ist;
- der Ringkanal weist eine die Schneideinrichtung umgebende Umfangswand sowie eine radial innere Wand auf.

Die Erfindung ist gekennzeichnet durch die folgenden Merkmale:
- es ist ein zweiter Ringkanal vorgesehen, der den ersten Ringkanal wenigstens auf einem Teil von dessen Umfang umgibt, und der aus der Umfangswand und einer Hüllwand gebildet ist;
- der zweite Ringkanal weist eine Öffnung zum Zuführen von Luft auf.
- der zweite Ringkanal steht mit dem Raum unterhalb des Messers in leitender Verbindung.

## Beschreibung

Die Erfindung betrifft einen Rasenmäher, insbesondere einen handgeführten mit Motorantrieb. Dabei kommt als Motor ein Benzinmotor in Betracht, oder ein Elektromotor.

Ein solcher Rasenmäher weist eine Schneideinrichtung auf. Die Schneideinrichtung besteht vorzugsweise aus einem langgestreckten Messerblatt, das in der Mitte seiner Länge um eine vertikale Achse drehbar gelagert ist. Das Messerblatt ist an seinen beiden Längenabschnitten beidseits der genannten Drehachse jeweils mit einer Schneide versehen, der eine Längenabschnitt auf der einen Schmalkante, und der andere Längenabschnitt auf der gegenüberliegenden Schmalkante. Das Messerblatt ist in vielen Fällen im wesentlichen horizontal angeordnet. Es kann auch eine gewisse Neigung gegen die Horizontalebene aufweisen, so dass die Schneideinrichtung nicht nur ihre Schneid- (oder Abschlag-) Funktion erfüllt, sondern auch eine Förderfunktion. Hierdurch wird ein Luftstrom erzeugt, der das abgeschlagene Gras in eine bestimmte Richtung fördert.

Motor und Schneideinrichtung sind von einem Gehäuse umschlossen. Das Gehäuse kann von einem Fahrgestell getragen sein oder selbst Räder aufweisen, die auf dem Rasen abrollen. Am Gehäuse ist ein Holm befestigt, mit dem der Rasenmäher manipuliert wird. Bei einem handgeführten Rasenmäher greift eine Bedienungsperson am Holm an, um den Rasenmäher über den Rasen hinweg zu führen und somit dessen Bewegungsbahn zu steuern. Außerdem bringt die Bedienungsperson über den Holm die Schubkraft zum Verfahren des Rasenmähers auf. Es gibt aber auch Rasenmäher, bei denen die genannten Räder einen Antrieb aufweisen, so dass die Bedienungsperson mittels des Holms lediglich noch die Steuerung auszuführen braucht. Auch ein derartiger Rasenmäher ist ein handgeführter Rasenmäher.

Das Gehäuse des Rasenmähers weist einen Auslass auf, durch welchen der grasführende Luftstrom austritt. Der Luftstrom kann dabei an einer Seite des Rasenmähers austreten - d. h. seitlich der Bewegungsbahn, die der Rasenmäher ausführt. In neuerer Zeit sind aber Rasenmäher im Allgemeinen mit Grasfangbehältern ausgestattet. Ein solcher Grasfangbehälter hat eine Öffnung, die dem genannten Auslass des Gehäuses entspricht, und die an das Gehäuse über den Gehäuseauslass angeschlossen ist. Der Grasfangbehälter befindet sich meist im hinteren Bereich des Gehäuses.

Der Grasfangbehälter kann einen Sack aus Gewebe oder anderen schlaffen Materialien aufweisen. Er kann aber auch aus einer Box mit starren Wänden bestehen. In jedem Falle ist die Wandung oder wenigstens ein Teil der Wandung des Grasfangbehälters luftdurchlässig. Handelt es sich um ein Gewebe, so ist dies von Natur aus porös. Handelt es sich um eine Box mit starren Wänden, so sind die Wände oder wenigstens einige der Wände perforiert. Bei Rasenmähern ohne Grasfangbehälter ist der Gehäuseauslass mit einer Klappe versehen, die um eine Schwenkachse schwenkbar gelagert ist. Der grasführende Luftstrom prallt gegen die Platte und öffnet diese, so dass der grasführende Luftstrom austreten kann.

Ein wichtiger Aspekt bei der Konstruktion eines Rasenmähers ist die Luftführung.

So wird Luft benötigt, um die Mahd aus dem Rasenmäher abzuführen, gegebenenfalls in den genannten Fangsack. Weiterhin wird Luft zur Kühlung des Motors benötigt.

In einer ersten bekannten Konstruktion von Rasenmähern wird ein und derselbe Luftstrom verwendet, um zunächst den Motor zu kühlen, und sodann die Mahd abzuführen. Der Luftstrom wird in einem solchen Falle von einem Lüfterrad angesaugt, das auf der Motorwelle sitzt. Der Luftstrom umströmt sodann zunächst den Motor bzw. dessen zu kühlende Bauteile, und gelangt sodann in einen Ringkanal, der das Messer der Schneideinrichtung des Rasenmähers konzentrisch umgibt. Der Ringkanal ist aus einer Innenwand und einer Umfangswand gebildet. Die Umfangswand umschließt den Flugkreis des Messers in geringem Abstand, beispielsweise 1 bis 20 mm. Aus dem Ringkanal tritt er in einen Raum oberhalb des Messers ein, nimmt dort die Mahd auf, und führt diese aus dem Inneren des Rasenmähergehäuses nach außen ab.

Das Schneidmesser ist im Allgemeinen ein Messerblatt, auch Messerbalken genannt. Es saugt seinerseits Luft von unten her an, besonders dann, wenn das Messer mit Lüfterflügeln versehen ist. Der zweite Luftstrom vereinigt sich in einem solchen Falle mit dem genannten ersten Luftstrom, erzeugt vom Lüfterrad des Motors.

Bei dem genannten zweiten Luftstrom liegt folgende Problematik vor:
(1) Wie erwähnt, saugt das Messer Luft von unten an, d. h. vom Bereich unterhalb des Messers.
(2) Um in den Ringkanal oberhalb des Messers gelangen zu können, muss die Luft durch den Ringspalt eintreten, der sich zwischen der Unterkante der Umfangswand des Ringkanals und dem Erdboden befindet.
(3) Das Messer muss sich beim Betrieb des Rasenmähers in einer bestimmten Höhe über dem Erdboden befinden. Dieses Höhenmaß will man frei wählen können, je nach gewünschter Schnitthöhe des Rasens.
(4) Die Unterkante der Umfangswand des Ringkanals muss aber aus Sicherheitsgründen bis unter das Messer reichen. Dies kann dazu führen, dass der genannte Spalt zwischen der Unterkante der Umfangswand und dem Erdboden sehr klein wird, so dass nicht mehr genügend Luft durch den Spalt hindurchtreten und in den Ringkanal gelangen kann. Die Folge davon ist, dass die Mahd nicht oder nicht vollständig aus dem Ringkanal und damit aus dem Inneren des Rasenmähers geführt wird.

In der DE 80 33 233 U ist ein Rasenmäher gezeigt, bei dem in einem Gehäuse eine durch eine Antriebsvorrichtung angetriebene und mit Windflügeln versehene Schneidvorrichtung und ein Auswurfkanal für das Schnittgut untergebracht sind. Der in der DE 80 33 233 U beschriebene Rasenmäher zeichnet sich dadurch aus, dass in der den die Schneidvorrichtung aufnehmenden Raum begrenzenden Gehäusewand von dem Luftdruck abhängig arbeitende, selbsttätig öffnende und schließende Rückschlagventile angeordnet sind.

Durch solche selbststätig wirkende Rückschlagventile wird gemäß der DE 80 33 233 U erreicht, dass in den Raum der Schneidvorrichtung zusätzliche Luft bei entstehendem Unterdruck eintreten kann und somit der Unterdruck aufgehoben wird. Je nach der Stärke des auftretenden Unterdruckes öffnen sich ein oder mehrere Rückschlagklappen automatisch, wobei dann die fehlende Luft von oben angesaugt wird.

Mit der in der DE 80 33 233 U vorgesehene Maßnahme soll lediglich dann Luft durch das Rückschlagventil von oben angesaugt werden, wenn bei und einem verhältnismäßig dichten Rasen im Mähergehäuse ein Unterdruck entsteht. Dies kann dazu führen, dass das Schnittgut nicht restlos aufgenommen wird und liegen bleibt. Durch die zusätzlich angesaugte Luft soll der Luftdruck aufgehoben werden. Eine ständige Zuführung von Luft durch einen zweiten Kanal ist nicht vorgesehen, ebensowenig offenbart die DE 80 33 233 U eine Zuführung von Luft aus dem zweiten Kanal unterhalb des Schneidmessers.

Aus der US 2002/0083694A1 ist ein nicht handgeführter Rasenmäher bekannt geworden, der mehrere Schneideinrichtungen sowie einen umlaufenden zweiten Ringkanal zeigt.

Der zweite Ringkanal hat gemäß der US 2002/0083694A1 lediglich die Aufgabe das Gras aufzurichten. Des Weiteren endet die Umfangswand des zweiten Ringkanales oberhalb des Schneidmessers. Die in den zweiten Ringkanal eingetragene Luft strömt daher oberhalb des Schneidmessers in den ersten Raum.

Ein weiterer Nachteil bei den Rasenmähern gemäß dem Stand der Technik ist, dass die Mäher bei Schnitthöhen von 20mm und weniger die Funktionsfähigkeit einbüßen, d.h. Schnitthöhen von weniger als 20mm können mit Mähern gemäß dem Stand der Technik nicht realisiert werden.

Der Erfindung liegt die Aufgabe zugrunde, die Nachteile des Standes der Technik zu überwinden und insbesondere einen Rasenmäher anzugeben, der sich gegenüber bekannten Rasenmähern durch eine verbesserte Mähleistung auszeichnet. Des Weiteren soll ein Rasenmäher angegeben werden, dessen Luftführung optimiert ist. Insbesondere soll auch ein Rasenmäher angegeben werden mit den Schnitthöhen geringer als 20 mm ohne Beeinträchtigung der Funktionsfähigkeit des Mähers erreicht werden können.

Erfindungsgemäß wird dies dadurch erreicht, dass eine Luftführung unterhalb des Messers erfolgt. In einer weiteren bevorzugten Ausführungsform ist der Mäher so ausgestaltet, dass die vom Messer von unten her angesaugte Luft in ausreichender Menge und unter ausreichendem Druck in den Ringkanal gelangt, so dass die Mahd vollständig und problemlos nach außen abgeführt werden kann.

Bei dem erfindungsgemäßen Rasenmäher ist zur Unterstützung der Mähleistung ein zweiter Ringkanal vorgesehen, der den genannten - nunmehr ersten - Ringkanal umgibt. Der zweite Ringkanal wird dabei aus der Umfangswand des ersten Ringkanals und einer radial außenliegenden Hüllwand gebildet. Der zweite Ringkanal wird dabei den ersten Ringkanal nur auf einem Teil von dessen Umfang umschließen, und zwar bevorzugt - in Fahrtrichtung des Rasenmähers gesehen - auf einem vorderen Umfangsbereich. Ein Umschlingungswinkel von wenigen Grad, beispielsweise 5 bis 10 Grad, kann ausreichen. Besser sind 20 bis 30 Grad. Auch 180 Grad sind denkbar. Der zweite Ringkanal ist mit einem Lufteinlass versehen, durch welchen Luft von außen eintreten kann. Es ist aber auch denkbar, den zweiten Ringkanal mit Luft zu versorgen, die von einem Lüfterrad angesaugt wird, das sich auf der Motorwelle befindet und somit vom Motor angetrieben wird. Die Unterkante der Hüllwand wird im Allgemeinen sehr weit herabreichen, bis in das Gras hinein. Bevorzugt ist die Unterkante der Umfangswand - die sich zwischen den beiden Ringkanälen befindet derart ausgestaltet, dass die Luft vom zweiten Ringkanal in den ersten Ringkanal unterhalb der Schneideinrichtung, insbeondere des Messers dem ersten Ringkanal zugeführt wird.

Durch die erfindungsgemäße Luftführung wir d erreicht, dass auch bei niedrigen Mähpositionen ausreichende Mähleistung zur Verfügung steht. Der erfindungsgemäße Rasenmäher verfügt auch bei niedrigen Mähpositionen über eine ausreichende Luftzufuhr, um die Mahd aus dem Mähkanal zu fördern.

Die Erfinder haben nämlich erkannt, dass bei herkömmlichen Rasenmähern bei niedrigen Schnitthöhen aufgrund der fehlenden Luftzufuhr das abgeschlagene bzw. abgeschnittene Gras nicht aus dem Mähkanal gefördert wird, so dass der Rasenmäher bei derartig niedrigen Schnitthöhen nicht funktionsfähig ist. Dies wird durch den erfindungsgemäßen Rasenmäher gelöst.

In einer bevorzugten Ausgestaltung der Erfindung wird eine derartige Luftführung dadurch erreicht, dass die Umfangswand im wesentlichen auf der gleichen Höhe endet wie die Unterkante des Schneidemessers. Hierdurch wird die Luft optimal unterhalb des Scheidemessers vom ersten in den zweiten Ringkanal transportiert. Da die Umfangswand nicht mehr die Schutzfunktion übernimmt, die den Benutzer gegen einen zufälligen Eingriff in das Messer schützen soll, muss die Umfangswand nicht mehr bis unter das Messer reichen. Es reicht somit aus, wenn sich die Umfangswand bis zur Höhe des Messers erstreckt. Die Schutzfunktion übernimmt bei dem erfindungsgemäßen Mäher die Hüllwand.

Dies bedeutet weiterhin, dass der Spalt zwischen der Unterkante der Umfangswand und dem Erdboden groß bemessen werden kann - ungeachtet der Höhe, auf welcher sich das Messer befindet. Ist der Spalt groß, so kann reichlich Luft aus dem zweiten - äußeren - Ringkanal in den ersten - inneren - Ringkanal strömen. Damit ist eine optimale Luftversorgung des Rasenmähers gewährleistet.

Der zweite Ringkanal bringt aber noch einen weiteren Vorteil: Das durch die strömende Luft erzeugte Geräusch wird minimiert. Dies ist darauf zurückzuführen, dass der Spalt zwischen dem Erdboden und der Unterkante der Umfangswand größer bemessen werden kann, so dass die Geschwindigkeit der die Unterkante umströmenden Luft geringer sein kann.

Die Erfindung ist anhand der Zeichnung näher erläutert. Darin ist im Einzelnen Folgendes dargestellt:
- Figur 1: zeigt in perspektivischer Darstellung eine erste Version eines Rasenmähers mit einem Benzinmotor im Betriebszustand.
- Figur 2: zeigt den Rasenmäher von Figur 1 in einer Arbeitspause.
- Figur 3: zeigt schematisch die Art der Luftführung im Schnitt im Bereich der Umfangswand zwischen erstem und zweitem Ringkanal.
- Figur 4: zeigt schematisch die Art der Luftzuführung im Schnitt im Bereich der Umfangwand zwischen erstem und zweitem Ringkanal, wobei die Luftführung eine Kreislaufführung ist.
- Figur 5: zeigt einen weiteren Rasenmäher mit einem Elektromotor in der Draufsicht.
- Figur 6: zeigt den Rasenmäher gemäß Figur 4 in einer Schnittansicht gemäß der Schnittlinie A-A.
- Figur 7: zeigt den Rasenmäher gemäß Figur 4 in einer Schnittansicht gemäß der Schnittlinie B-B.

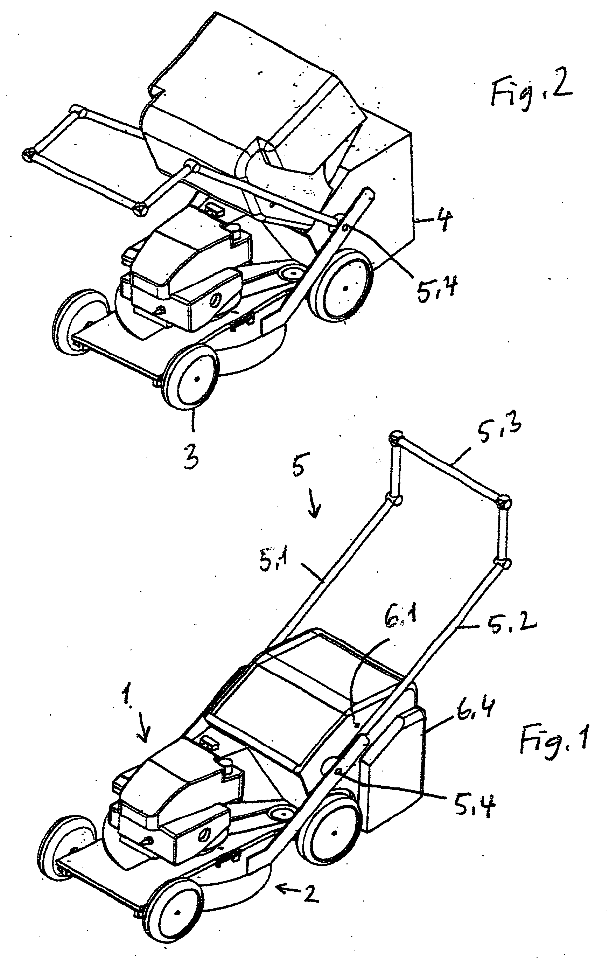

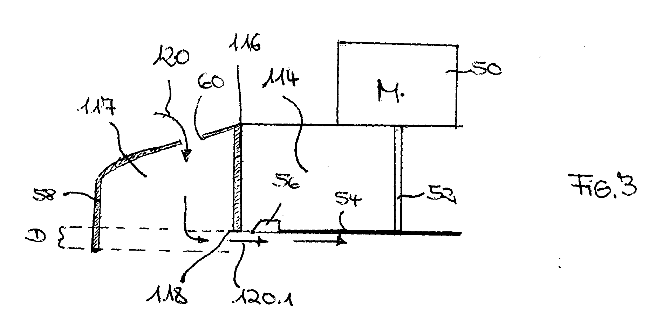

Als Motor des erfindungsgemäßen Rasenmähers kann sowohl ein Elektromotor als auch ein Verbrennungsmotor vorgesehen werden. In den Figuren 1 und 2 ist ein Rasenmäher mit einem Benzinmotor in der Übersicht gezeigt. Figur 3 zeigt schematisch im Schnitt detailliert eine mögliche Art der Luftführung bei einem Rasenmäher mit Benzinmotor. Im Falle der Figuren 1 bis 2 ist als Motor ein Viertakt-Benzinmotor 1 vorgesehen, von dem hier nur eine Abdeckung erkennbar ist. Der Motor weist eine vertikale Abtriebswelle auf.

Man erkennt ein Gehäuse 2. Dieses umschließt mit seinem unteren, zylindrischen Teil eine hier nicht erkennbare Schneideinrichtung. Die Abdeckung des Motors 1 kann integraler Bestandteil des Gehäuses 2 sein.

Der Rasenmäher weist vier Räder 3 auf. Diese können vom Motor angetrieben sein. Dies ist jedoch nicht notwendigerweise der Fall.

Der Grasfangbehälter 4 ist an das Gehäuse abnehmbar angesetzt und verriegelt. Das Gehäuse 2 hat einen Auslass, und der Grasfangbehälter hat einen Einlass - beide hier nicht erkennbar. Auslass und Einlass sind deckungsgleich, so dass das Innere des Gehäuses 2 und das Innere des Grasfangbehälters 4 miteinander in leitender Verbindung stehen. Der Grasfangbehälter ist außerdem perforiert. Als Perforation können Schlitze oder Bohrungen oder sonstige Löcher dienen.

Man erkennt ferner einen Führungsholm 5. Dieser umfasst zwei Schenkel 5.1, 5.2 sowie einen diese beiden miteinander verbindenden Steg 5.3. Der Führungsholm 5 ist am Gehäuse 2 befestigt. Dabei ist er in der dargestellten Ausführungsform um eine horizontale Schwenkachse 5.4 verschwenkbar, wie in Figur 2 dargestellt.

Die entscheidende Art der Luftführung und der zweite Ringraum, der auch bei einem Rasenmäher mit Benzinmotor angewandt werden kann ist in Figur 3 dargestellt. Figur 3 zeigt die Art der Luftführung, insbesondere zwischen erstem und zweitem Ringraum am Beispiel eines Rasenmähers mit Benzinmotor, wie besprochen in den figuren 1 und 2 gezeigt, ohne hierauf beschränkt zu sein. In Figur 3 ist für einen Benzinmäher für einen Motor 50 im Schnitt die Art der Luftführung dargestellt. Der Motor 50 treibt über eine Motorwelle 52 eine Schneideinrichtung 54, hier ein Schneidmesser mit Flügeln 56 an. Die Gehäusevorderwand des Mähers ist mit 58 gekennzeichnet. Die Gehäusevorderwand ist um eine Tiefe D gegenüber dem Schneidmesser nach unter gezogen und übernimmt somit eine Schutzfunktion.

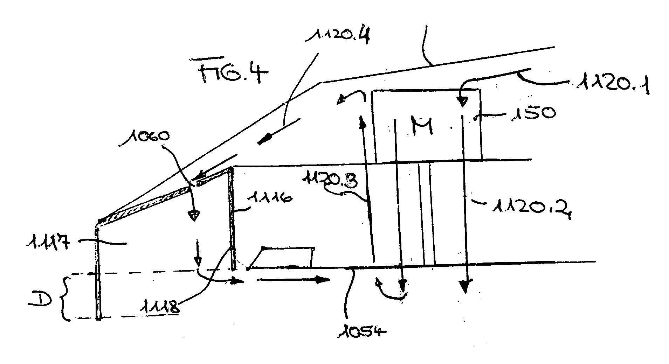

Erfindungsgemäß ist im Gehäuse ein erster Ringkanal 114 oberhalb der Schneideinrichtung 54 vorgesehen sowie ein zweiter Ringkanal 117. In den zweiten Ringkanal 117 strömt über eine Öffnung 60 bei atmosphärischem Druck Luft entlang Pfeil 120. Die Umfangswand 116 zwischen erstem Ringkanal 114 und zweitem Ringkanal 117 ist derart ausgestaltet, dass die im zweiten Ringkanal 117 über die Öffnung 60 einströmende Luft entlang dem Pfeil120 unterhalb der Schneideinrichtung 54 wie mit Pfeil 120.1 angedeutet vom zweiten Ringraum in den ersten Ringraum überführt wird. Diese Art der Luftführung unterstützt die Mähleistung und erlaubt niedrige Schnitthöhen. Des Weiteren ist zu sehen, dass die Unterkante 118 der Umfangswand 116 im Wesentlichen auf der Höhe der Schneideinrichtung 54 endet. Dies führt dazu, dass die durch die Öffnung 60 einströmende Luft unter das Messer geführt wird und so wie oben beschrieben die Mähleistung unterstützt wird. Anstelle eines Einströmens von Luft unter atmosphären Druck in einen zweiten Ringkanal 117 kann auch eine Art Kreislaufführung vorgesehen sein, was insbesondere bei Elektromähern von Vorteil ist. Eine derartige Art der Kreislaufführung ist in Figur 4 dargestellt.

Der in Figur 4 im Schnitt dargestellte Rasenmäher umfasst einen Elektromotor 150. Der Elektromotor weist Ventilatoren auf, die Luft von der Gehäuseoberweite her entlang Pfeil 1120.1 ansaugen. Die angesaugte Luft durchströmt den Motor 150 nach unten hin entlang Pfeil 1120.2 und kühlt diesen. Sodann wird die Luft entlang der Pfeile 1120.3 und 1120.4 über die Öffnung 1060 in den zweiten Ringkanal 1117 gefördert und gelangt von dort unterhalb der Kante 1118 der Umfangswand 1116 unter die Schneideinrichtung 1054. Im Gegensatz zur Ausgestaltung gemäß Figur 3 gelangt somit die Luft nicht direkt von außen in den zweiten Ringkanal, sondern nachdem sie zur Motorkühlung verwandt wurde. Die Luft wird innerhalb des Gehäuses, das sowohl den Elektromotor wie auch die Öffnung 1060 für den zweiten Ringraum umgibt, geführt. Der Vorteil einer derartigen Luftführung ist darin zu sehen, dass durch das Ansaugen der Luft über ein Lüfterrad oder einen Ventilator ein gewisser Druck aufgebaut werden kann und somit die Leistung gegen der Ausführungsform wie in Figur 3 dargestellt verbessert werden kann, bei der das Einströmen der Luft lediglich mit atmosphärischem Druck erfolgt. Auch bei der Ausführungsform gemäß Figur 4 wird die Luft des zweiten Ringraums aufgrund der speziellen Ausgestaltung der Umfangswand 1116 deren Unterkante 1118 mit der der Schneideinrichtung 1054 übereinstimmt unterhalb der Schneideinrichtung zugeführt und unterstützt insoweit die Mähleistung.

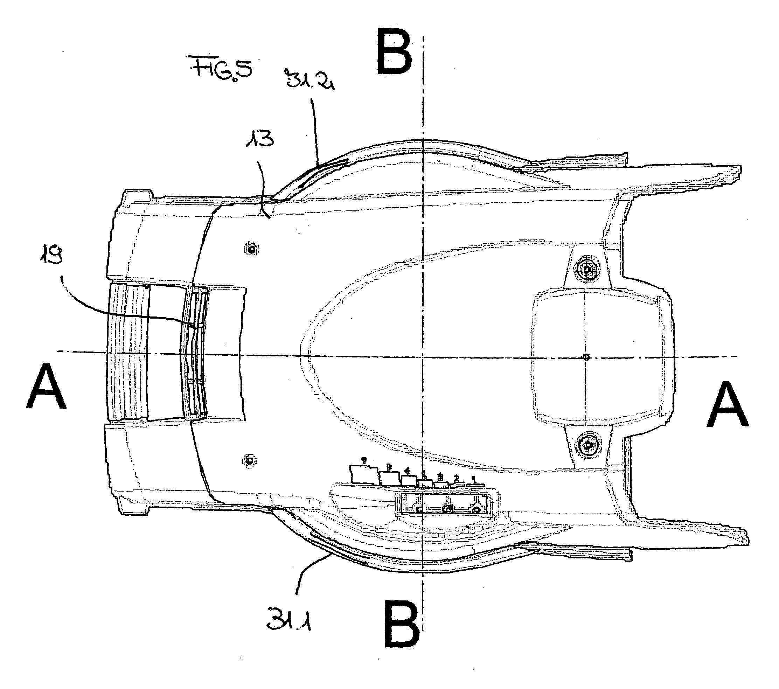

Selbstverständlich können die Arten der Luftführung, wie in Figur 3 und Figur 4 dargestellt,miteinander kombiniert werden, d.h. eine Luftzuführung über einen separaten Einlass von außen direkt in den zweiten Ringraum einerseits und eine Kreislaufführung andererseits. Ein Rasenmäher mit einem derartigen kombinierten System ist in den Figuren 5 bis 7 dargestellt.

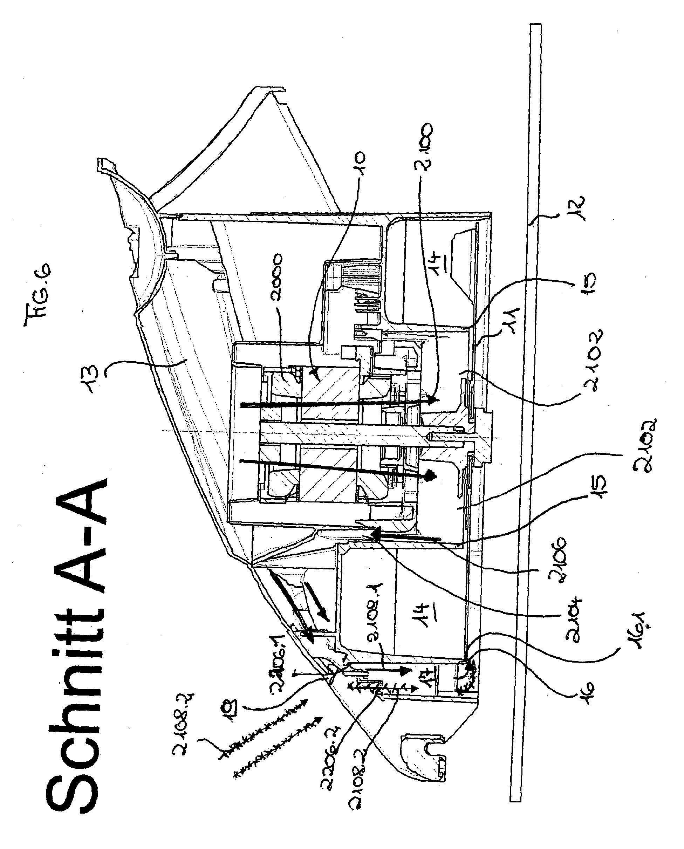

Figur 5 zeigt das Gehäuse eines Elektrorasenmähers von oben. Nicht dargestellt sind die Räder des Rasenmähers. Das Gehäuse ist mit der Bezugsziffer 13 gekennzeichnet. Das Gehäuse 13 umschließt sowohl den Elektromotor wie auch die Schneideinrichtung. Zum Einlaß von Luft in den zweiten Ringkanal aus der Atmosphäre zusätzlich zur Luft, die durch die Ventilatoren des Motors bzw. die Lüfterräder angesaugt werden, umfasst das Gehäuse 13 einen Lüftungsschlitz 19, über den Luft von außen in den zweiten Ringraum einströmt. Die Luft die von den Lüfterrädern zur Kühlung des Elektromotors angesaugt wird, wird bevorzugt durch Lufteinlässe seitlich oberhalb des Elektromotors angesaugt. Die seitlichen Lufteinlässe sind mit 31.1 und 31.2 bezeichnet. Der zweite Ringraum ist in Figur 6, die einen Schnitt entlang der Linie A-A gemäß Figur 5 zeigt, gut zu erkennen.

In der Darstellung entlang des Schnittes A-A erkennt man den Elektromotor 10, der eine Schneideinrichtung antreibt. Der wichtigste Bestandteil der Schneideeinrichtung ist ein Messer 11. Das Messer 11 ist höhenverstellbar, so dass dessen Abstand vom Erdboden 12, auf dem der Rasen wächst, einstellbar ist, um eine bestimmt Schnitthöhe zu erzielen. Mit dem erfindungsgemäßen Rasenmäher sind Schnitthöhen von wenniger als 20mm möglich. Der Elektromotor 10 umfasst einen Ventilator mit Lüfterrädern 2000 zum Ansaugen von Kühlluft. Vorliegend wird die Luft aus dem oberhalb des Motors liegenden Raum über die in Figur 5 gezeigten seitlichen Lufteinlässe 31.1, 31.2 angesaugt; entlang des Pfeiles 2100 in einen dritten umlaufenden Ringraum 2102 oberhalb des Messers 11 gefördert, dort umgelenkt und gelangt von dort in einen Kanal 2104. Über Kanal 2104 wird die Luft entlang Pfeil 2106 über eine Eintrittsöffnung 2206.1 in den zweiten Ringkanal 17 gefördert, wo sich der Luftstrom entlang des Pfeiles 2108.1 mit frisch über den Lüftungschlitz 19 und eine Eintrittsöffnung 2206.2, in den zweiten Ringkanal 17 einströmende Luft entlang des Pfeiles 2108.2 mischt. Der Motor 10 und die Schneideinrichtung mit Messer 11 werden wie dargestellt von einem Gehäuse umschlossen.

Über dem Messer 11 wird ein innerer Ringkanal 14 ausgebildet. Der innere Ringkanal wird aus einer Innenwand 15 und einer Umfangswand 16 gebildet.

Die Umfangswand 16 reicht mit ihrer Unterkante 16.1 im Wesentlichen bis zur Ebene des Messers 11. Die Unterkante 16.1 könnte aber auch unterhalb des Messers 11 liegen oder auch oberhalb des Messers, wenn sichergestellt ist, dass die in den zweiten Ringraum bzw. den zweiten Ringkanal 17 entweder durch Rückführung entlang Pfeil 2108.1 oder frisch angesaugte Luft entlang Pfeil 2108.2, im Wesentlichen in den Raum unterhalb des Messers 11 geführt wird.

Der zweite Ringkanal 17 ist aus der Umfangswand 16 und einer Hüllwand 18 gebildet. In den zweiten Ringkanal 17 führt eine Eintrittsöffnung 2206.1 und eine zweite Eintrittsöffnung 2206.2 durch welche Luft von außen durch die in Figur 5 dargestellte schlitzförmige Öffnung 19 eintreten kann.

Der zweite, äußere Ringkanal steht mit dem Raum unterhalb des Messers 11 in leitender Verbindung. Das Messer 11 saugt beim Betrieb Luft an. Dieses Ansaugen von Luft wird durch Flügel 11.1 unterstützt, die Bestandteil des Messers 11 sind. Sie können dem Messer z. B. angeformt sein. Es kommt somit zu einer Luftströmung gemäß der dargestellten Pfeile 2108.1 und 2108.2. Die Luft wird zum einen im Kreislauf geführt - Pfeil 2108.1 - zum anderen gelangt sie von außen durch die Luftschlitze 19 - Pfeil 2108.2 - in den äußeren, zweiten Ringkanal 17, sodann in den Raum unterhalb des Messers 11, tritt sodann in den ersten, inneren Ringkanal 14 ein, von wo aus sie nach außen abgeführt wird zusammen mit der Mahd, d.h. dem abgeschlagenen bzw. abgeschnittenen Gras.

Man erkennt den weiteren Luftstrom entlang Pfeil 2100, der von einem Lüfterrad 2000 des Ventilators, der auf der Welle 10.1 des Motors 10 sitzt, erzeugt wird.

Der erste, innere Ringkanal 14 hat kreisförmigen Querschnitt. Er umschließt die Schneideinrichtung und damit das Messer 11 voll und ganz.

Im Gegensatz hierzu erstreckt sich der zweite, äußere Ringkanal 17, bevorzugt nur auf einem kleineren Kreisbogen um den ersten, inneren Ringkanal 14 herum. Der Umschlingungswinkel braucht nur wenige Grad zugetragen, beispielsweise 5 - 10 Grad. Er wird in der Regel über 30 Grad betragen, möglicherweise auch bis zu 180 Grad.

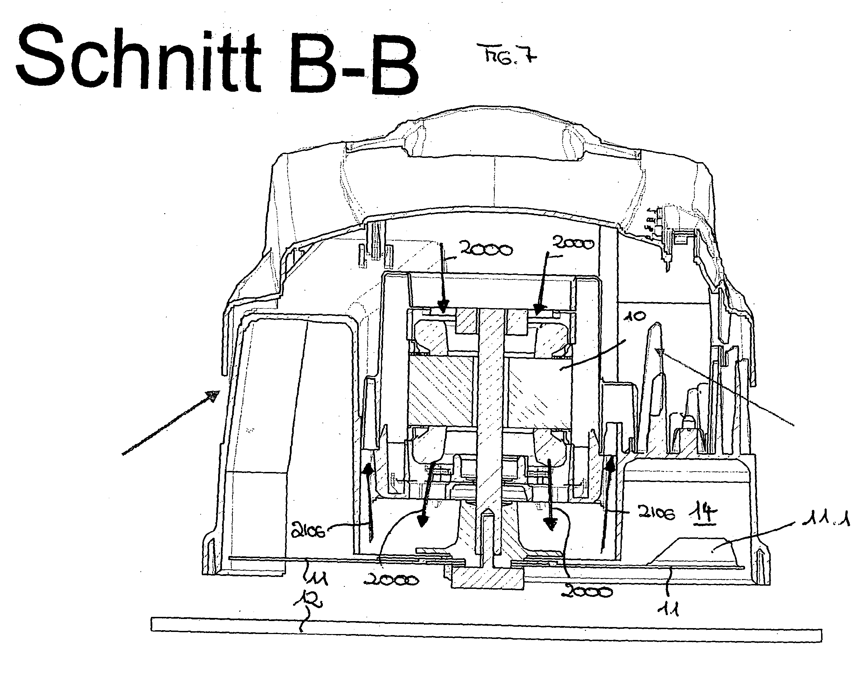

Figur 7 zeigt einen Schnitt B-B der Draufsicht in Figur 5. Gleiche Bauteile wie in den Figuren 5 bis 7 sind mit denselben Bezugsziffern gekennzeichnet. Sehr gut zu erkennen ist der Elektromotor 10 sowie die Lüfterräder 2000 des Ventilators und die Kreislaufführung des den Elektromotor durchströmenden Luftstromes entlang der Pfeile 2100 und 2106 sowie den Kanal 2104 zur Führung des zur Kühlung des Elektromotors angesaugten Teilluftstromes in den zweiten Ringkanal.

## Patentansprüche

1. Rasenmäher;
umfassend
eine Schneideinrichtung, die ein um eine vertikale Achse umlaufendes Messer (11) umfasst;
einen Ringkanal (14), der konzentrisch zur Drehachse des Messers (11) verläuft und oberhalb des Messers (11) angeordnet ist wobei
der Ringkanal (14) eine die Schneideinrichtung umgebende Umfangswand aufweist, die den Flugkreis des Messers (11) umgibt;
einen zweiten Ringkanal (17) der den ersten Ringkanal (14) wenigstens auf einem Teil von dessen Umfang umgibt, und der aus der Umfangswand (16) und einer Hüllwand (18) gebildet ist; wobei
der zweite Ringkanal (17) wenigstens eine Öffnung(60, 1060, 2206.1, 2206.2) zum Zuführen von Luft aufweist,
**dadurch gekennzeichnet, dass**
der zweite Ringkanal (17) mit dem Raum unterhalb des Messers (11) in leitender Verbindung steht.

2. Rasenmäher nach Anspruch 1, **dadurch gekennzeichnet, dass**
der Rasenmäher einen Motor aufweist, der das Messer (11) antreibt.

3. Rasenmäher nach Anspruch 1 oder 2, **dadurch gekennzeichnet, dass**
der Rasenmäher ein Gehäuse zur Aufnahme von Motor (1,10) und Schneideinrichtung umfasst.

4. Rasenmäher nach einem der Ansprüche 1 bis 3, **dadurch**
**gekennzeichnet,dass**
die Öffnung des zweiten Ringkanals (17) eine Außenöffnung (60, 2206.2) die in direkter leitender Verbindung mit der Atmosphäre steht, ist.

5. Rasenmäher nach einem der Ansprüche 1 bis 3, **dadurch gekennzeichnet,**
**dass**
die Öffnung des zweiten Ringkanals eine Öffnung (1060,2206.1)ist, die in leitender Verbindung mit einem Luftkanal steht, der die den Motor durchströmende Luft rückführt.

6. Rasenmäher nach einem der Ansprüche 1 bis 3, **dadurch gekennzeichnet, dass** die Öffnung des zweiten Ringkanals (17) sowohl eine Außenöffnung (2206.1), die in direkter leitender Verbindung mit der Atmosphäre steht, wie auch eine Öffnung (2206.2) umfasst, die in leitender Verbindung mit einem Luftkanal steht, der die den Motor durchströmende Luft rückführt.

7. Rasenmäher nach einem der Ansprüche 1 bis 6, **dadurch gekennzeichnet,**
**dass**
der Motor (1,10) ein Benzinmotor ist.

8. Rasenmäher nach einem der Ansprüche 1 bis 6, **dadurch gekennzeichnet, dass** der Motor (1, 10) ein Elektromotor (10) ist.

9. Rasenmäher nach einem der Ansprüche 1 bis 8, **dadurch gekennzeichnet, dass** sich die Unterkante (16.1) der Umfangswand (16) im Wesentlichen auf der Höhe des Messers (11) befindet.

10. Rasenmäher nach einem der Ansprüche 1 bis 8, **dadurch gekennzeichnet, dass** sich die Unterkante (16.1) der Umfangswand (16) oberhalb des Messers (11) befindet.

11. Rasenmäher nach einem der Ansprüche 1 bis 10, **dadurch gekennzeichnet, dass** sich die Unterkante der Hüllwand (18) unterhalb der Unterkante (16.1) der Umfangswand (16) befindet.

12. Rasenmäher nach einem der Ansprüche 1 bis 11, **dadurch gekennzeichnet, dass** die Hüllwand (18) die Umfangswand (16) auf einem Bogen von zwischen 5 und 90 Grad umschließt.

13. Rasenmäher nach einem der Ansprüche 1 bis 12, **dadurch gekennzeichnet, dass** der zweite Ringkanal (17) mit dem Luftauslass eines Ventilators (20) in leitender Verbindung steht, der vom Motor (10) angetrieben ist.

14. Rasenmäher nach Anspruch 13, **dadurch gekennzeichnet,**
**dass** ein Rückführkanal (2104) vorgesehen ist, so dass Luft, die aus dem Luftauslass eines Ventilators für den Motor (10) ausströmt, zur Öffnung (2206.2) des zweiten Ringkanals transportiert wird.

15. Rasenmäher nach einem der Ansprüche 1 bis 14, **dadurch gekennzeichnet, dass** der Abstand zwischen der Umfangswand (16) und dem Flugkreis des Messers (11) zwischen einem und 20 mm beträgt.

16. Rasenmäher nach einem der Ansprüche 1 bis 15, **dadurch gekennzeichnet, dass** das Messer (11) hohenverstellbar ist, insbesondere derart, dass Schnitthöhen geringer als 20 mm eingestellt werden können.
